Europäisches Patentamt

European Patent Office

Office européen des brevets

(11) Numéro de publication: **0 362 100**
**A1**

## DEMANDE DE BREVET EUROPEEN

Numéro de dépôt: **89460029.5**

Date de dépôt: **13.09.89**

(51) Int. Cl.5· **A01K 1/015**

Priorité: **28.09.88 FR 8812929**

Date de publication de la demande:
**04.04.90 Bulletin 90/14**

Etats contractants désignés:
**AT BE CH DE ES FR GB GR IT LI LU NL SE**

Demandeur: **QUEGUINER INDUSTRIES SA**
**B.P. 1 45, rue Clémenceau**
**F-29403 Landivisiau(FR)**

Inventeur: **Mingam, Jean-Yves**
**Coadic Saint Sauveur**
**F-29230 Landivisiau(FR)**
Inventeur: **Cauzien, Marc**
**19, rue Albert Demun**
**F-29320 Landivisiau(FR)**

Mandataire: **Le Guen, Louis François**
**CABINET Louis LE GUEN 38, rue Levavasseur**
**B.P. 91**
**F-35802 Dinard Cédex(FR)**

(54) **Dalle chauffante.**

(57) La dalle est constituée par un sandwich formé d'une couche supérieure (1) en béton de résine, un réseau de résistances électriques (2), une couche de matière isolante (3) et une couche inférieure (4) en béton de résine.

Le réseau de résistances électriques présente la caractéristique d'être directement en contact avec la face inférieure de la couche supérieure (2) ainsi qu'avec la face supérieure de la couche de matière isolante (3).

La matière isolante est de la laine de roche comprimée. La couche de matière isolante a une épaisseur de l'ordre de 2 cm.

FIG. 3

La présente invention concerne des dalles chauffantes utilisées notamment pour l'élevage, et en particulier pour des nids à porcelets ou des planchers de bâtiment de post-sevrage.

Il est connu que, dans les cases de mise bas des truies, il faut prévoir des conditions d'environnement favorables, en réglant la température de l'air ambiant et en réglant la température du plancher de la case, notamment celle de la zone sur laquelle les porcelets se reposent à l'écart de la truie.

Pour réaliser un plancher de nid à porcelets et le chauffer, on a déjà proposé plusieurs solutions. A titre d'exemple, dans le document FR-A-2 198 516, on a décrit un plancher formé de membrures tubulaires allongées en matière plastique, telle que le chlorure de polyvinyle, dans lesquelles circule un liquide caloporteur. Dans ce document, on mentionne également les avantages de la matière plastique par rapport à l'acier, à l'aluminium ou le béton, dû au fait que les excréments des animaux n'adhèrent pas sur la surface de plastique. La matière plastique a une meilleure résistance à la corrosion que les autres produits cités. Sa nature relativement inerte ne favorise pas la croissance des bactéries. Toutefois, les matières plastiques sont relativement tendres et elles se rayent facilement, les rayures constituant des endroits où les excréments peuvent stagner ce qui favorise la croissance des bactéries.

Dans le document EP-A-118 139, on a également mentionné l'inconvénient des caillebotis chauffant autant dessous que dessus dans lesquels la plus grande partie de la chaleur est transmise à l'air ambiant, ce qui crée des courants ascendants d'air chaud préjudiciables à la santé des porcelets. On a également mentionné l'inconvénient de la surface rugueuse du béton qui peut blesser les porcelets, en particulier aux genoux. En conclusion, dans ce document, on préconise l'utilisation d'une partie métallique continue chauffée par un fluide caloporteur passant dans des tuyaux montés sous la plaque et isolés dans la partie inférieure. De préférence, la surface métallique est galvanisée. L'acier a, par rapport au plastique, l'avantage d'être plus dur, mais il est sensible à la corrosion. D'autre part, la construction d'une plaque chauffante telle que décrite dans le document cité en second est compliquée et donc chère.

Les deux documents mentionnés précédemment décrivaient des planchers dont le chauffage est réalisé au moyen d'un fluide caloporteur. Ce système présente l'inconvénient de former des planchers dont la structure et l'infrastructure sont relativement complexes.

On a pensé à résoudre ce problème en utilisant des éléments chauffants électriques. Ainsi, les documents US-A-3 041 441 et NL-A-7314646 décrivent des dalles chauffantes dont les éléments chauffants sont constitués par un câble électrique résistant disposé à l'intérieur de ces dalles.

Plus précisément, le document US-A-3 041 441 décrit une dalle chauffante pour de jeunes animaux de basse-cour constituée par un sandwich formé d'une couche supérieure en résine renforcée de fibres de verre, d'un câble électrique résistant formant l'élément chauffant, d'une couche de matière isolante en polystyrène et d'une couche inférieure en résine renforcée de fibre de verre. Entre les couches supérieure et inférieure sont disposées des entretoises servant à renforcer mécaniquement la dalle. Par ailleurs, la couche isolante comprend des parties en saillie formant entre elles des conduits de chaleur et recevant dans des ouvertures les câbles chauffants. Bien que considérablement simplifiée par rapport aux dispositifs comportant des éléments chauffants à fluide caloporteur, la structure de cette dalle est encore complexe. Par ailleurs, sa couche supérieure est constituée de résine et de fibre, qui présente l'inconvénient, comme vu précédemment, d'être rayable et de faire stagner les excréments des animaux, ce qui favorise la croissance de bactéries. Un autre inconvénient dans le choix de résine comme matériau pour les couches supérieure et inférieure est le fait que les dalles ne présentent pas de résistances mécaniques suffisantes pour être autoportantes.

Quant au document NL-A-73-14646, il décrit une dalle dont la structure est voisine de celle de la dalle du document US-A-3 041 441. Elle est constituée d'un sandwich formé d'une couche supérieure en polyester, d'un câble résistant passant dans des saillies formées dans une couche isolante en polyuréthane et d'une autre couche de polyester. Cette dalle est aussi de structure assez complexe et présente une surface supérieure également rayable. Elle n'est pas non plus autoporteuse.

Un objet de l'invention consiste à prévoir une dalle chauffante qui ne souffre pas·des inconvénients des solutions mentionnées ci-dessus et qui constitue un véritable plancher chauffant ne rayonnant que par sa surface supérieure, dont le matériau soit inerte pour ne pas favoriser la croissance de bactéries, relativement dur pour ne pas se laisser rayer, non poreux comme le béton ordinaire, non sensible à la corrosion chimique, qui soit léger et de fabrication aisée de manière à obtenir un prix de revient bon marché.

Par ailleurs, la finition de l'aspect de la surface doit faciliter le nettoyage sans être dangereuse pour les animaux.

Les objets de l'invention mentionnés ci-dessus, ainsi que d'autres, sont atteints par la mise en oeuvre de combinaisons de moyens définies dans la revendication 1. Des mesures préférentielles sont indiquées dans les revendications dépendantes.

L'expérimentation faite par la demanderesse a montré que le béton de résine est un matériau électriquement isolant ce qui permet d'appliquer directement le réseau de résistances électriques contre la face inférieure de la couche supérieure de béton de résine. On augmente ainsi l'efficacité de la surface chauffante. L'expérimentation faite par la demanderesse a aussi montré que le béton de résine possède une excellente inertie thermique ce qui permet d'obtenir une très bonne homogénéité de la température sur toute la surface chauffante de la dalle. Ainsi, les porcelets ne se concentrent pas en quelques points chauds, ce qui améliore leur confort et donc leur croissance. Ces deux constatations ont permis l'utilisation du chauffage électrique avec toute la souplesse d'emploi et de régulation qui en résulte.

Par ailleurs, le béton de résine est un matériau dur, qui ne se raye pas facilement et qui résiste mieux à l'abrasion que le béton de ciment. Il est suffisamment inerte chimiquement pour ne pas favoriser la croissance des bactéries. Enfin, sa résistance mécanique est telle qu'avec des épaisseurs de couche de 1 cm, on peut réaliser des dalles autoportantes dont les dimensions des côtés peuvent aller de 0,15 à 3 mètres.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

les Figs. 1 et 2 montrent en coupe et en plan une dalle suivant l'invention, et

la Fig. 3 montre, plus en détail, la structure de la dalle des Figs. 1 et 2, ainsi qu'un mode de fabrication de celle-ci, et

la Fig. 4 montre en coupe, une variante de la dalle suivant l'invention.

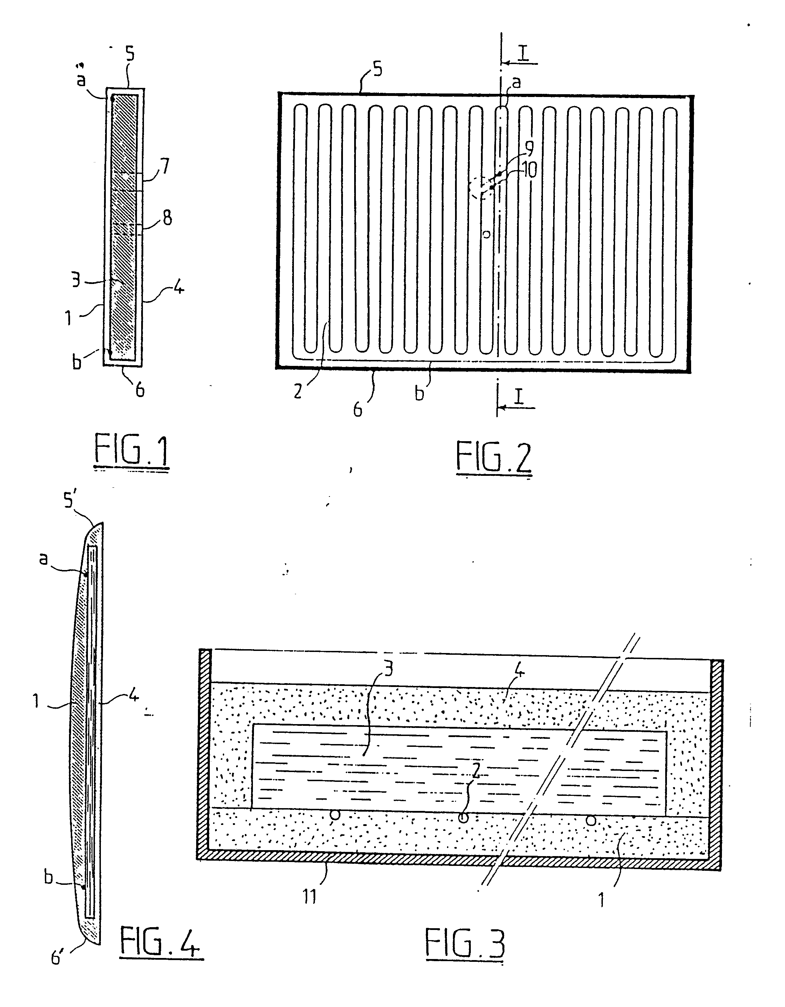

Dans la coupe de la Fig. 1, on a montré la couche supérieure 1 de la dalle, un câble électrique chauffant 2 coupé en a et b, la couche de matière isolante 3, la face inférieure 4 de la dalle et deux côtés latéraux 5 et 6 de la dalle. La Fig. 1 montre également le trou 7 par lequel passent les fils d'alimentation du câble électrique chauffant et un trou 8 par lequel une sonde de température, non montrée, peut être montée dans la dalle.

En variante, le trou de passage des fils d'alimentation du câble et le trou réservé à la sonde peuvent déboucher sur les côtés latéraux de la dalle.

A la sortie de la dalle, le câble d'alimentation est protégé soit par un presse-étoupe, soit par une queue de câble.

Les couches 1 et 4, et les côtés 5 et 6 sont en béton de résine et ont, par exemple, une épaisseur de 1 cm. Le béton de résine est constitué par une résine polyester enrobant un aggrégat de silice, tel que le produit commercialisé sous la marque "REXLAN" par la demanderesse.

Comme le montre la Fig. 2, qui est une coupe suivant un plan horizontal, dans laquelle la couche d'isolant 3 est supposée transparente, le câble 2 qui relie les deux fils d'alimentation 9, 10 du trou 7, a une forme sinueuse, les coudes étant uniformément répartis tout le long de la dalle. Le câble 2 peut être un câble chauffant du commerce, isolé au PVC ou au téflon, il peut être, de plus, à double isolation. De préférence, deux segments de câble parallèles et adjacents sont distants de 3 cm environ. La résistance du câble alimentée sous 220 V est prévue pour avoir, par exemple, une puissance de 110 W.

La connexion du câble résistant avec le câble d'alimentation est du type à double isolation, c'est à dire protégée d'abord par leur gaine rétractable et ensuite par un enrobage de réserve en époxy ou de silicone coulé dans un fourreau.

La couche 3 de matière isolante est, par exemple, en laine de roche comprimée qui a une tenue mécanique déjà importante et l'épaisseur de la couche peut être de 2 cm. Cette épaisseur peut varier selon la nature du matériau.

Le trou 8 permet de faire passer une sonde, à travers l'isolant 4, jusqu'à toucher la couche 1 entre deux segments de câble. Une telle sonde est à relier à un circuit de régulation, non montré.

A la Fig. 3, on a montré un moule rectangulaire 11, au fond duquel on coule la couche de béton 1. Par ailleurs, on prépare, sur une couche d'isolant 3, le câble 2 avec sa forme définitive. Les bords latéraux de la couche 3 sont découpés de manière à ce que celle-ci puisse entrer dans le moule en laissant libre environ 1 cm de chaque côté. Une fois la couche 1 presque durcie, on pose l'ensemble 2, 3, inversé sur cette couche 1, en réservant les espaces libres. Enfin, on coule sur l'arrière de la couche isolante 3, la dernière couche de béton de résine 4 qui pénètre également dans les espaces libres en y créant les côtés latéraux de la dalle.

La Fig. 4 représente une coupe d'une dalle chauffante dont la face supérieure 1 est bombée. Sur cette figure, les mêmes éléments qu'à la Fig. 1 portent les mêmes références. Par rapport à la dalle représentée à la Fig. 1, les côtés latéraux 5, 6 ont disparus au profit d'arrondis 5', 6'. Le fait que la face supérieure 1 soit bombée, la présence des arrondis 5', 6', et le fait que la surface extérieure de la dalle soit rendue parfaitement lisse, facilitent l'écoulement des excréments vers l'extérieur de la plaque.

Néanmoins, cette surface peut être gaufrée avec des bosses et des creux pour permettre aux animaux de ne pas glisser.

L'expérience a montré qu'avec une dalle dont la structure et la fabrication ont été décrites ci-dessus, la température de la face supérieure était pratiquement uniforme sur toute la surface, tandis que la face inférieure était pratiquement froide.

**Revendications**

1) Dalle chauffante, notamment pour nid à porcelets. constituée par un sandwich formé d'une couche supérieure, d'un réseau de résistances électriques, d'une couche de matière isolante et d'une couche inférieure, caractérisée en ce que la couche supérieure (1) et la couche inférieure (4) sont réalisées en béton de résine coulé, et en ce que le réseau de résistances est directement en contact avec la face inférieure de la couche supérieure (2) ainsi qu'avec la face supérieure de la couche de matière isolante (3).

2) Dalle chauffante selon la revendication 1 caractérisée en ce que la matière isolante est de la laine de roche comprimée et la couche de matière isolante a une épaisseur de l'ordre de 2 cm.

3) Dalle chauffante selon la revendication 1 ou 2. caractérisée en ce que la couche inférieure (4) en béton de résine a une épaisseur de l'ordre de 1 cm.

4) Dalle chauffante selon l'une des revendications 1 à 3. caractérisée en ce que la couche supérieure (1) de béton de résine a une épaisseur de l'ordre de 1 cm.

5) Dalle chauffante suivant l'une des revendications 1 à 4, caractérisée en ce que les faces latérales (5, 6) du sandwich sont fermées par du béton de résine.

6) Dalle chauffante selon l'une des revendications 1 à 5, caractérisée en ce que la couche supérieure (1) en béton de résine présente une surface extérieure convexe.

7) Dalle chauffante selon la revendication 5 ou 6, caractérisée en ce que ses faces latérales sont constituées d'arrondis 5', 6'.

FIG.1

FIG.2

FIG.4

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-3041441 (ELBERT) <br> * colonne 2, lignes 11 - 36; figures 1, 4 * <br> --- | 1, 2, 5 | A01K1/015 |
| A,D | NL-A-7314646 (BIOPHARM B.V.) <br> * revendications 1-3; figures 1, 2 * <br> --- | 1-5 | |
| A | FR-A-2251151 (TRIPLET) <br> * revendication 3; figure 1 * <br> --- | 1, 5 | |
| A | BE-A-846387 (POLYMETAL P.V.B.A.) <br> * page 3, alinéa 2 * <br> --- | 1 | |
| A | NL-A-8200150 (SYMBION HOLDING B.V.) <br> * page 5, lignes 10 - 25; figure 5 * <br> --- | 1-5 | |
| A | US-A-2963565 (MOORE) <br> --- | | |
| A,D | FR-A-2198516 (BECKER MANUFACTURING COMPANY, INCORPORATED) <br> --- | | |
| A,D | EP-A-0118139 (NOOYEN) <br> ----- | | |

**DOMAINES TECHNIQUES RECHERCHES (Int. Cl.5)**

A01K

Le présent rapport a été établi pour toutes les revendications

| Lieu de la recherche | Date d'achèvement de la recherche | Examinateur |
|---|---|---|
| LA HAYE | 04 JANVIER 1990 | VON ARX V.U. |